# FASCICULE DE BREVET EUROPEEN

(11) **EP 0 626 280 B1**
(45) Date de publication et mention de la délivrance du brevet: **12.03.1997**
(21) Numéro de dépôt: 94107272.0
(22) Date de dépôt: 10.05.1994
(51) Int. Cl.: B60C 29/02, B60C 25/18

(54) **Valve de gonflage et procédé utilisant ladite valve pour gonflage d'un pneumatique avec anneau d'étanchéité**
Aufblasventil und Verfahren dieses Ventil zum Aufpumpen von Reifen mit Dichtungsring zu verwenden
Inflation valve and method using this valve to inflate tyres with a sealing ring

(30) Priorité: 26.05.1993 FR 9306609
(43) Date de publication de la demande: 30.11.1994
(73) Titulaire: COMPAGNIE GENERALE DES ETABLISSEMENTS MICHELIN - MICHELIN & CIE, 63040 Clermont-Ferrand Cédex (FR)
(72) Inventeur: Girard, Dominique, F-63119 Chateaugay (FR)
(74) Mandataire: Devaux, Edmond-Yves

(56) Documents cités:
- BE-A- 547 557
- FR-A- 1 580 721
- GB-A- 812 373
- US-A- 1 822 592
- US-A- 2 285 008
- US-A- 3 863 697

## Description

La présente invention concerne un dispositif de gonflage d'un pneumatique sans chambre à air pour engin de manutention, pneumatique monté sur sa jante de service avec un anneau d'étanchéité disposé sur le fond de jante entre les parois intérieures des deux bourrelets dudit pneumatique. Elle concerne également le procédé de gonflage utilisant un tel dispositif.

De manière connue, le procédé de gonflage d'un ensemble tel que décrit ci-dessus prévoit pour le gonflage de munir l'anneau d'étanchéité d'un orifice cylindrique dans lequel est inséré un tube pourvu à son extrémité radialement extérieure d'un filetage servant au vissage d'un écrou après mise en place d'une rondelle d'étanchéité, et à son extrémité radialement intérieure d'un deuxième filetage sur lequel on vient visser une valve dite "simple coude" ou une rallonge coudée rigide ou souple, après mise en place d'une deuxième rondelle d'étanchéité.

Un tel dispositif de gonflage présente de multiples inconvénients et plus particulièrement donne lieu à des difficultés de montage de l'anneau d'étanchéité sur la jante de service et des difficultés de mise en place de la branche de valve. La face radialement intérieure de l'anneau d'étanchéité présente, du fait de la position de l'extrémité du tube fileté, une surépaisseur et comme un anneau d'étanchéité normalement épais est peu extensible, son passage sur la jante pour atteindre la fenêtre de passage de la valve est très malaisé.

En outre le tube fileté et l'anneau d'étanchéité étant correctement positionnés, le vissage de la branche de valve "simple coude" ou d'une rallonge coudée de valve n'est pas une opération simple du fait de la présence du disque de roue se trouvant à proximité de la fenêtre de la jante, et qu'il est nécessaire d'effectuer plusieurs rotations de la branche de valve afin de la bloquer par vissage.

Afin de remédier aux inconvénients ci-dessus, l 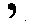 invention propose un dispositif pour le gonflage d 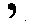 un pneumatique monté sur une jante en plusieurs parties et à fond plat muni d 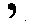 une fenêtre de passage pour valve, avec un anneau d 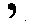 étanchéité disposé entre les parois intérieures des bourrelets du pneumatique, ledit anneau étant muni d 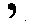 une orifice cylindrique de diamètre ⌀ et destiné à être disposé en coïncidence avec la fenêtre, ledit dispositif comprenant au moins une valve de gonflage et un moyen d 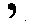 attache de ladite valve, caractérisé en ce que ladite valve comprend une tige rectiligne de diamètre compris entre 1,2 et 2,0 ⌀ destinée à pénétrer en force dans l 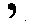 orifice de l 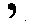 anneau, ladite tige étant munie, à une distance λ de son extrémité au moins égale à la longueur de l 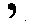 orifice, d 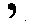 un élément mâle de verrouillage destiné à s 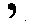 associer à un organe femelle de verrouillage extérieur à la valve, la tige de ladite valve étant prolongée de l 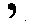 autre côté de l 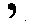 élément par une tige coudée filetée.

L'organe ou élément femelle de verrouillage forme avec la valve proprement dite, muni de l'élément mâle de verrouillage, le dispositif de gonflage du pneumatique. L'organe de verrouillage peut être soit un élément de la jante, soit un élément de l'anneau d'étanchéité, inclus dans cet anneau ou formant un ensemble avec cet anneau.

Dans le cas de l'élément de jante, l'organe femelle est la fenêtre destinée au passage de la valve et le moyen de verrouillage de la valve est alors une plaque à quatre côtés, deux de ses côtés étant parallèles et rectilignes, espacés d'une distance, mesurée perpendiculairement auxdits côtés, inférieure à la largeur de la fenêtre de valvage, et ayant une longueur supérieure à la largeur de ladite fenêtre, les deux autres côtés pouvant être rectilignes ou curvilignes. Cette plaque est soit solidaire de la tige de valve, soit libre en rotation autour de ladite tige.

Dans le cas d'un élément femelle de verrouillage de l'anneau d'étanchéité, celui-ci peut être une rondelle métallique ayant un orifice central circulaire muni de deux encoches diamétralement opposées. Ces encoches sont destinées au passage de deux ergots de verrouillage placés sur la tige de valve, ces ergots étant les éléments mâles de verrouillage.

La rondelle métallique est préférentiellement disposée entre deux armatures de renforcement de fils ou câblés textiles, ces armatures étant calandrées par un mélange de caoutchouc, dans le cas avantageux où la rondelle est intégrée à l'anneau d'étanchéité, pendant la fabrication dudit anneau.

D'une autre manière avantageuse, la rondelle métallique peut être logée dans une cavité de l'anneau, l'utilisation de la rondelle présente l'avantage de l'uniformité de la face radialement intérieure de l'anneau d'étanchéité.

Dans l 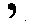 optique de ne pas avoir d 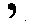 ouverture dans la jante de montage d 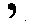 un ensemble formé d 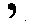 un pneumatique et de sa chambre à air, le brevet US 1 822 592 décrit un dispositif de fixation d 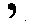 une valve de gonflage à la paroi d 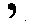 un pneumatique. Pour la maintien de la tige de valve à l 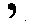 intérieur de corps tubulaire de valve, un collier comporte des chevilles coopérant avec des encoches d 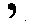 un rebord solidaire du corps permettant une fixation rappelant celle d 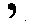 une baïonnette.

Le brevet belge 547 557 décrit une valve de gonflage pour pneumatique sans chambre à air et sans anneau d 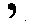 étanchéité, valve montée sur une jante à fond plat et à plusieurs éléments, et présentant la particularité d 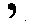 être en deux parties, l 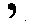 étanchéité étant assurée à al fois par un joint élastique et un joint métal sur métal.

Quant au brevet FR 1 580 721, il concerne principalement une jante pour pneumatique sans chambre à air, dans laquelle se trouve une ouverture pour recevoir un fût de valve, des moyens d 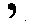 obturation temporaire coopérant avec la jante et bloquant l 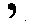 ouverture pour empêcher l 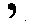 air de s 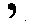 échapper du pneumatique. Les moyens d 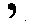 obturation consistent fondamentalement en un diaphragme ou cloison en caoutchouc et le fût de valve est muni de moyens destinés à percer une telle cloison. Un tel système permet à l 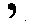 utilisateur le libre choix du fût de valve et de l 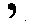 élément de prolongement d 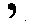 un tel fût.

Contrairement au procédé décrit dans le brevet ci-dessus, l 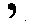 anneau d 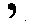 étanchéité de l 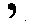 invention n 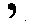 est pas obturé et le procédé de gonflage utilisant les moyens tels que définis précédemment consiste, conformément à l 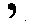 invention, après montage du pneumatique sur la jante et de l'anneau d'étanchéité en prenant soin de faire coïncider l'orifice de gonflage de l'anneau avec la fenêtre de passage de la valve, à insérer manuellement dans l'orifice de l'anneau la tige de valve lubrifiée dans une position telle que les moyens de verrouillage de la valve puissent pénétrer à travers les organes de verrouillage extérieurs à la valve, en appuyant sur la face radialement intérieure de l'anneau d'étanchéité et à faire subir une rotation d'un angle α à l'élément de verrouillage de la valve, α étant préférentiellement égal à 90°.

Les caractéristiques et avantages de l'invention seront mieux compris à l'aide de la description qui suit et qui se réfère au dessin, illustrant à titre non limitatif des exemples d'exécution et sur lequel :
- la figure 1 représente schématiquement une première variante de valve conforme à l'invention ;
- la figure 2 représente schématiquement une deuxième variante de valve ;
- les figures 3A à 3C représentent schématiquement respectivement :
   . une vue de dessus (figure 3A) de l'élément femelle de verrouillage destiné à être associé à l'élément de la valve de la figure 2 ;
   . une vue selon la ligne AA de la figure 3A (figure 3B) ;
   . l'anneau d'étanchéité (figure 3C) destiné à recevoir l'élément des figures 3A et 3B ;
- la figure 4 représente schématiquement un anneau d'étanchéité dans lequel est intégré l'élément de verrouillage
- les figures 5A à 5C, représentent respectivement les étapes du procédé de gonflage, conforme à l'invention ;

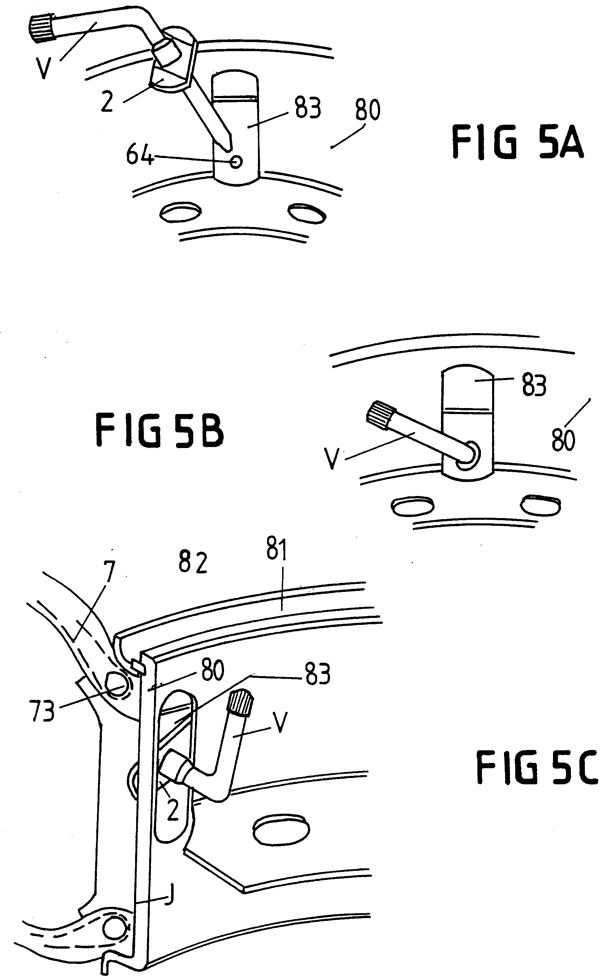

- la figure 5A représentant la mise en place de la valve ;
- la figure 5B représentant le verrouillage de la valve ;
- la figure 5C représentant l'ensemble monté et gonflé.

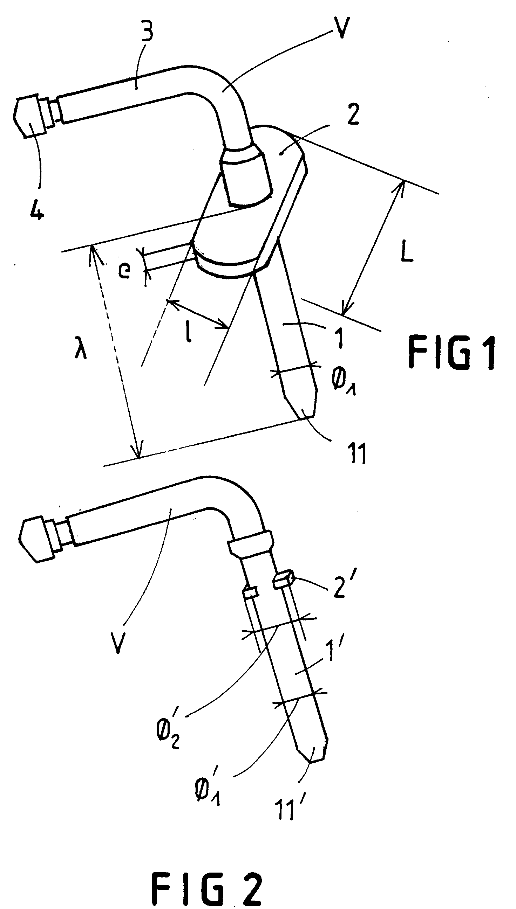

La valve V de la figure 1, qui est une valve coudée, comprend principalement une tige 1, de diamètre ⌀1, égale à 6 mm, et de longueur λ égale à 30 mm, un bras (3) fileté sur lequel est vissé le bouchon de valve (4). Solidaire de la tige (1), existe l'élément mâle de verrouillage de la valve sous la forme d'une plaque métallique (2), d'épaisseur e égale à 2 mm et possédant deux côtés parallèles et rectilignes de longueur L égale à 27 mm, et deux côtés curvilignes de largeur l égale à 14 mm, faiblement inférieure à la largeur de la fenêtre (83) (figure 5) ménagée dans un siège de jante (80) sur lequel vient s'appliquer l'anneau d'étanchéité (6).

La valve V', montrée sur la figure 2, diffère principalement de celle montrée sur la figure 1 par le moyen de verrouillage qui consiste dans ce cas à deux ergots (2') dont les extrémités respectives sont distantes de la quantité ⌀'₂ égale à 9 mm, alors que le diamètre ⌀'₁ de la tige 1 cylindrique est égal à 5 mm. La tige (1') comme dans le cas de la figure 1, a une extrémité (11') tronconique.

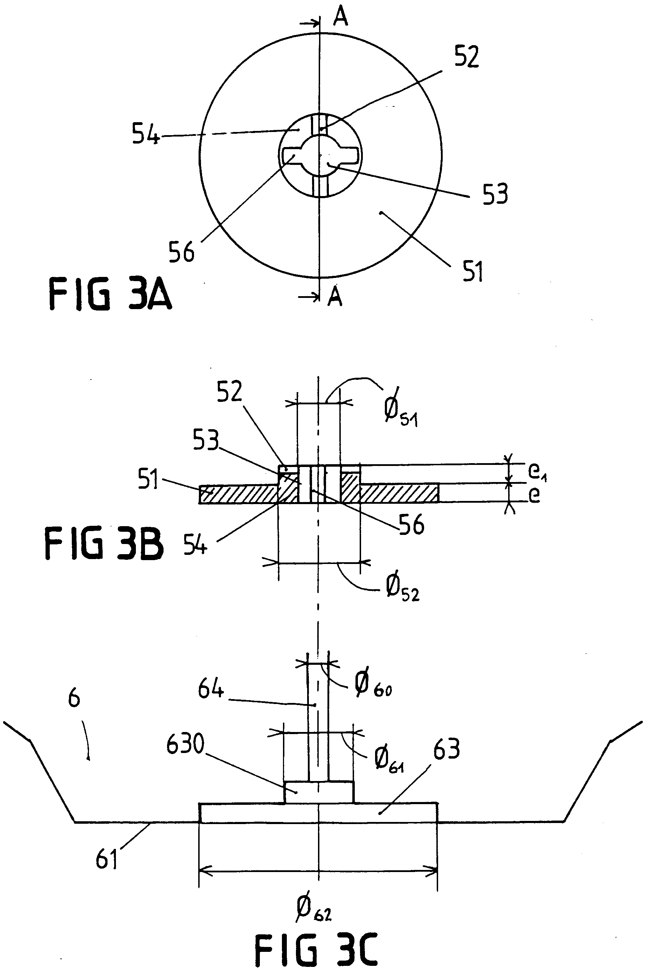

La rondelle métallique (51), montrée sur les figures 3A et 3B est l'organe de verrouillage extérieur à la valve, destiné à recevoir les ergots (2') de la valve de la figure 2. Cette rondelle (51) se présente sous la forme d'un cylindre creux de très faible hauteur ou épaisseur e de 2 mm, dont le creux intérieur (53) de diamètre ⌀51 égal à 6 mm est bordé d'un rebord circulaire (54) d'épaisseur e sensiblement égale à 2 mm ; le diamètre extérieur de ce rebord ⌀52 étant égal à 11mm. Ce rebord circulaire (54) est discontinu par le fait qu'il est pourvu de deux encoches (56) diamétralement opposées, ces encoches permettant aux ergots (2') de la valve de traverser la rondelle métallique (51).

Quant à l'anneau d'étanchéité (6), montré sur la figure 3C et destiné à recevoir la rondelle métallique (51), il présente sur sa face radialement intérieure (61) une première cavité circulaire (63) dont le diamètre ⌀62 est égal au diamètre de la rondelle (51), et une deuxième cavité circulaire (630) dont le diamètre ⌀61 est légèrement inférieur au diamètre ⌀52, la profondeur de cette deuxième cavité correspondant à la surélévation du rebord (54), par rapport à la surface de la rondelle. Au milieu de cette cavité (630), prend naissance l'orifice (64) de passage de la tige de valve, orifice dont le diamètre ⌀60 est égal à 3 mm, c'est-à-dire inférieur au diamètre ⌀₁ de la tige (1') de la valve V'.

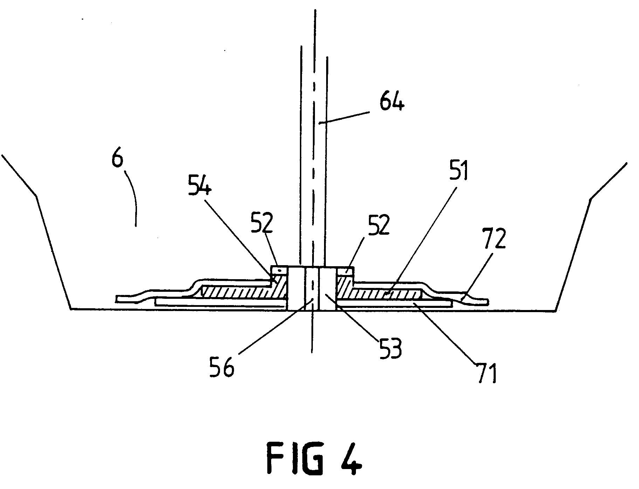

Sur la figure 4 est représenté un anneau d'étanchéité (6) dans lequel la rondelle métallique (51), telle que représentée sur les figures 3A et 3B, est intégrée lors de la fabrication de l'anneau (6). Les ergots (2') de la valve V' pénètrent dans les encoches (56) prévues à cet effet, et après rotation de la valve de 90°, ces ergots prennent position dans les logements (52).

Afin de renforcer les parties de l'anneau (6) avoisinantes de la rondelle (6), existent deux armatures de renforcement (71, 72) formées de câbles textiles caoutchoutées, une armature (71) étant disposée radialement au dessous de la rondelle (51) et une deuxième armature (72), disposée radialement au dessus. Ces deux armatures sont sous forme de couronnes, circulaires ayant une faible épaisseur.

Le procédé de gonflage correspondant à l'utilisation d'une valve V' selon la figure 2 et d'une rondelle métallique (51), appliquée contre la face radialement intérieure de l'anneau d'étanchéité (6) et plus particulièrement logée dans la(les) cavité(s) (63, 630) prévues à cet effet sur la face radialement intérieure (61), comprend les étapes simples suivantes :
- lubrification de la tige de valve (1');
- application dans les cavités (63, 630) de la rondelle métallique (51);
- pénétration en force de la tige, de valve dans l'orifice (64) de l'anneau (6), les ergots de verrouillage (2') de la valve V' passant par les encoches (56) prévues à cet effet dans la rondelle (51) ;
- rotation d'un angle α de la tige de valve (1') dans l'orifice (64), α étant égal à 90°, de manière à ce que les ergots (2') viennent se placer dans les 2 logements (52) prévus à cet effet dans le rebord circulaire (54) de la rondelle (51).
- gonflage de l'ensemble par la valve V'.

Si le procédé décrit ci-dessus utilise une rondelle (51) séparable et séparée de l'anneau d'étanchéité (6), un procédé équivalent utilise un anneau (6) dont la base est pourvue axialement dans sa partie centrale d'une rondelle métallique (51), alors partie intégrante de l'anneau (6), renforcée comme décrit précédemment ou non.

Le procédé, utilisant une valve V dont la tige (1) est pourvue d'une plaque métallique (2) en tant que moyen de verrouillage, est représenté très schématiquement sur les figures 5A à 5C. Sur la figure 5A, la valve V selon la figure 1 est mise en face de l'orifice (64) de l'anneau d'étanchéité (6), orifice que l'on aperçoit au travers de la fenêtre (83) de passage de la valve, existante sur le fond de jante (80) de la jante J de montage.

La valve est présentée face à la fenêtre 83 de sorte que la plaque métallique (2) ait ses deux côtés rectilignes, parallèles entre eux et de longueur L, parallèles aux bords rectilignes de la fenêtre (83), comme montré sur la figure 5B.

On enfonce alors la tige (1) lubrifiée dans l'orifice (64) et on exerce alors une pression supplémentaire sur la valve et sur l'anneau d'étanchéité (6) pour pouvoir effectuer une rotation d'un angle α égal à 90° de la tige (1) et de la plaque (2) solidaire de la tige, de telle sorte qu'il y ait verrouillage, comme montré sur la figure 5C, cette rotation s'effectuant sans que le disque (D) de roue gêne en quoi que ce soit la manoeuvre. Il suffit alors de gonfler le pneumatique à armature de carcasse (7), ancrée dans chaque bourrelet à une tringle (73), pour que l'anneau d'étanchéité (6) exerce une pression suffisante sur la plaque (2) pour son maintien et pour éviter les fuites, les bourrelets du pneumatique se plaquant alors sur les rebords de jante (81) dont l'un d'eux est maintenu en place sur la jante J par l'intermédiaire d'un anneau de verrouillage (82).

Dans le cas d'une plaque libre en rotation autour de ladite tige, la rotation est effectuée à l'aide d'un moyen étranger à la valve V, moyen qui peut être une simple tige métallique.

## Revendications

1. Dispositif pour le gonflage d'un pneumatique monté sur une jante (J), en plusieurs parties (80, 81, 82) et à fond plat (80) muni d'une fenêtre (83) de passage pour valve (V, V'), avec un anneau d'étanchéité (6) disposé entre les parois intérieures des bourrelets du pneumatique, ledit anneau (6) étant muni d'un orifice cylindrique (64) de diamètre ⌀ et destiné à être disposé en coincidence avec la fenêtre (83), ledit dispositif comprenant au moins une valve (V, V') de gonflage et un moyen d'attache de ladite valve, caractérisé en ce que ladite valve (V, V') comprend une tige (1, 1') rectiligne de diamètre ⌀1, ⌀'1 compris entre 1,2 et 2,0 ⌀ et destinée à pénétrer en force dans l 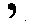 orifice (64) de l 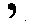 anneau (6), ladite tige étant munie, à une distance λ de son extrémité (11, 11') au moins égale à la longueur de l'orifice (64), d'un élément mâle de verrouillage (2, 2'), destiné à s'associer à un organe femelle de verrouillage (83, 51) extérieur à la valve (V, V'), la tige (1, 1') de ladite valve (V, V') étant prolongée de l'autre côté de l'élément (2, 2') par une tige coudée filetée (3).

2. Dispositif selon la revendication 1, caractérisé en ce que l'élément mâle de verrouillage (2) de la valve (V) est une plaque métallique à quatre côtés dont deux côtés sont parallèles, rectilignes, espacés d'une distance inférieure à la largeur de la fenêtre de valvage et dont la longueur est supérieure à la largeur de ladite fenêtre, l'organe de verrouillage extérieur à la valve étant la fenêtre (83) de passage de la valve (V).

3. Dispositif selon la revendication 1, caractérisé en ce que l'élément de verrouillage (2) de la valve (V') est constitué par deux ergots, et en ce que l'organe de verrouillage extérieur à la valve (V') est une rondelle métallique (51) ayant un orifice central circulaire (53) muni de deux encoches (56) diamétralement opposées.

4. Dispositif selon la revendication 3, caractérisé en ce que la rondelle métallique (51), est logée dans une cavité (63, 630) prévue à cet effet sur la face radialement intérieure de l'anneau d'étanchéité (6).

5. Dispositif selon la revendication 3, caractérisé en ce que la rondelle métallique (51) est partie intégrante de l'anneau d'étanchéité (6).

6. Dispositif selon la revendication 5, caractérisé en ce que la rondelle métallique (51) est recouverte radialement à l'intérieur et à l'extérieur par deux armatures de renforcement (71, 72) sous forme de couronnes circulaires, et formées de câbles textiles.

7. Procédé de gonflage d'un pneumatique monté sur une jante (J) en plusieurs parties (80, 81, 83) et à fond plat (80), muni d'une fenêtre (83) de passage pour valve, avec un anneau d'étanchéité (6) disposé entre les parois intérieures des bourrelets du pneumatique, ledit anneau (6) étant muni d'un orifice cylindrique (64) de diamètre ⌀, caractérisé en ce que, après montage, sur la jante (J), du pneumatique et de l'anneau d'étanchéité (6) en prenant soin de faire coïncider l'orifice (64) de l'anneau (6) avec la fenêtre (83) de valvage de la jante (J), on insère manuellement dans l'orifice (64) de l'anneau (6) la tige (1, 1') de valve (V, V') lubrifiée dans une position telle que l'élément de verrouillage (2, 2') de la valve (V, V') puisse pénétrer à travers l'organe de verrouillage (83, 51) extérieur à la valve, en appuyant sur la face radialement intérieure (61) de l'anneau (6) d'étanchéité et à faire subir une rotation d'un angle α à l'élément de verrouillage (2, 2')) de la valve (V, V') l'angle α étant préférentiellement égal à 90°.

## Claims

1. A device for the inflation of a tyre mounted on a rim (J) having several parts (80, 81, 82) and a flat base (80) provided with a passage opening (83) for a valve (V, V'), with a sealing ring (6) arranged between the inner walls of the beads of the tyre, said ring (6) being provided with a cylindrical orifice (64) of diameter ⌀ intended to be arranged to coincide with the opening (83), said device comprising at least an inflation valve (V, V') and an attachment means for said valve, characterised in that said valve (V, V') comprises a rectilinear stem (1, 1') of a diameter ⌀1, ⌀'1 which is between 1.2 and 2.0 ⌀ and intended to penetrate by force into the orifice (64) of the ring (6), said stem being provided, at a distance λ from its end (11, 11') which is at least equal to the length of the orifice (64), with a male locking element (2, 2') intended to cooperate with a female locking element (83, 51) external to the valve (V, V'), the stem (1, 1') of said valve (V, V') being extended on the other side of the element (2, 2') by a threaded bent stem (3).

2. A device according to Claim 1, characterised in that the male locking element (2) of the valve (V) is a metal plate having four sides, two of which are rectilinear and parallel and spaced apart by a distance less than the width of the valve opening and the length of which is greater than the width of said opening, the locking member external to the valve being the passage opening (83) for the valve (V).

3. A device according to Claim 1, characterised in that the locking element (2) of the valve (V') is formed of two spurs and in that the locking member external to the valve (V') is a metal washer (51) having a central circular orifice (53) provided with two diametrically opposed notches (56).

4. A device according to Claim 3, characterised in that the metal washer (51) is housed in a cavity (63, 630) provided for this purpose on the radially inner face of the sealing ring (6).

5. A device according to Claim 3, characterised in that the metal washer (51) is an integral part of the sealing ring (6).

6. A device according to Claim 5, characterised in that the metal washer (51) is covered radially on the inside and outside by two backing reinforcements (71, 72) in the form of circular rings and formed of textile cords.

7. A method of inflating a tyre mounted on a rim (J) having several parts (80, 81, 83) and a flat base (80), provided with a valve passage opening (83) with a sealing ring (6) arranged between the inner walls of the beads of the tyre, said ring (6) being provided with a cylindrical orifice (64) of diameter ⌀, characterised in that, after the mounting the tyre and sealing ring (6) on the rim (J), taking care to have the orifice (64) of the ring (6) coincide with the valve opening (83) of the rim (J), the lubricated stem (1, 1') of the valve (V, V') is manually inserted in the orifice (64) of the ring (6) in a position such that the locking element (2, 2') of the valve (V, V') can penetrate through the locking member (83, 51) external to the valve, resting against the radially inner face (61) of the sealing ring (6) and subjecting the locking element (2, 2') of the valve (V, V') to a rotation of an angle α, the angle α preferably being equal to 90°.

## Patentansprüche

1. Vorrichtung zum Aufpumpen eines Reifens, der auf einer Felge (J) aus mehreren Teilen (80, 81, 82) und mit flachem Boden (80) montiert ist, der mit einem Fenster (83) zum Durchtritt für ein Ventil (V, V') versehen ist, mit einem Dichtungsring (6), der zwischen den Innenwänden der Wülste des Reifens angeordnet ist, wobei der genannte Ring (6) mit einer zylindrischen Öffnung (64) mit einem Durchmesser ⌀ versehen ist und dazu bestimmt ist, in Übereinstimmung mit dem Fenster (83) angeordnet zu werden, wobei die genannte Vorrichtung mindestens ein Aufpumpventil (V, V') und Mittel zur Befestigung des genannten Ventils aufweist, dadurch **gekennzeichnet**, daß das genannte Ventil (V, V') eine gerade Stange (1, 1') mit einem Durchmesser ⌀1, ⌀'1 aufweist, der zwischen 1,2 und 2,0 ⌀ liegt und dazu bestimmt ist, unter Kraftwirkung in die Öffnung (64) des Ringes (6) einzudringen, wobei die genannte Stange mit einem Abstand λ von ihrem Ende (11, 11'), der mindestens gleich ist der Länge der Öffnung (64), mit einem Vater-Verriegelungselement (2, 2') ausgestattet ist, das zur Zuordnung zu einem äußeren Mutter-Verriegelungsorgan (83, 51) am Ventil (V, V') bestimmt ist, wobei die Stange (1, 1') des genannten Ventils (V, V') auf der anderen Seite des Elements (2, 2') durch eine abgewinkelte, mit Gewinde versehene Stange (3) verlängert ist.

2. Vorrichtung nach Anspruch 1, dadurch **gekennzeichnet**, daß das Vater-Verriegelungselement (2) des Ventils (V) eine Metallplatte mit vier Seiten ist, von denen zwei Seiten parallel, geradlinig und um eine Strecke beabstandet sind, kleiner ist als die Breite des Fensters der Ventilanordnung, und von denen die Länge größer ist als die Breite des genannten Fensters, wobei das äußere Verriegelungsorgan am Ventil das Fenster (83) zum Durchtritt des Ventils (V) ist.

3. Vorrichtung nach Anspruch 1, dadurch **gekennzeichnet**, daß das Verriegelungselement (2) des Ventils (V') von zwei Nasen gebildet ist, und daß das äußere Verriegelungsorgan am Ventil (V') eine Metallscheibe (51) ist, die eine kreisförmige Mittelöffnung (53) aufweist, die mit zwei diametral gegenüberliegenden Ausbuchtungen (56) versehen ist.

4. Vorrichtung nach Anspruch 3, dadurch **gekennzeichnet**, daß die Metallscheibe (51) in einem Hohlraum (63, 630) sitzt, der zu diesem Zweck auf der radial inneren Fläche des Dichtungsringes (6) vorgesehen ist.

5. Vorrichtung nach Anspruch 3, dadurch **gekennzeichnet**, daß die Metallscheibe (51) ein integrierendes Teil des Dichtungsringes (6) ist.

6. Vorrichtung nach Anspruch 5, dadurch **gekennzeichnet**, daß die Metallscheibe (51) radial an der Innen- und Außenseite durch zwei Verstärkungsbeschläge (71, 72) in der Form kreisförmiger Kränze abgedeckt ist, die aus Textilseilen gebildet sind.

7. Verfahren zum Aufpumpen eines Reifens, der auf einer Felge (J) aus mehreren Teilen (80, 81, 82) und mit ebenem Boden (80) montiert ist, der mit einem Fenster (83) zum Durchtritt für das Ventil versehen ist, mit einem Dichtungsring (6), der zwischen den Innenwänden der Wülste des Reifens angeordnet ist, wobei der genannte Ring (6) mit einer zylindrischen Öffnung (64) mit dem Durchmesser ⌀ versehen ist, dadurch **gekennzeichnet**, daß nach der Montage des Reifens und des Dichtungsringes (6) auf der Felge (J), wobei man dafür sorgt, die Öffnung (64) des Ringes (6) mit dem Fenster (83) der Felge (J) für die Ventilanordnung zusammenfallen zu lassen, man von Hand in die Öffnung (64) des Ringes (6) die geschmierte Stange (1, 1') des Ventils (V, V') bis in eine Lage einführt, die so ist, daß das Verriegelungselement (2, 2') des Ventils (V, V') durch das äußere Verriegelungsorgan (83, 51) am Ventil hindurchtreten kann, indem man gegen die radial innere Fläche (61) des Dichtungsringes (6) andrückt und das Verriegelungselement (2, 2') des Ventils (V, V') einer Drehung um einen Winkel α unterzieht, wobei der Winkel α vorzugsweise gleich 90° ist.
